# EUROPEAN PATENT SPECIFICATION

(11) **EP 4 569 056 B1**
(45) Date of publication and mention of the grant of the patent: **03.09.2025**
(21) Application number: 24787145.2
(22) Date of filing: 09.10.2024
(51) Int. Cl.: C10M 145/10, C10M 107/28

(54) **POLYALKYL (METH)ACRYLATE POLYMERS AS HIGH VISCOSITY BASE FLUIDS**
POLYALKYL(METH)ACRYLAT-POLYMERE ALS HOCHVISKOSE BASISFLÜSSIGKEITEN
POLYMÈRES DE (MÉTH)ACRYLATE DE POLYALKYLE UTILISÉS EN TANT QUE FLUIDES DE BASE À VISCOSITÉ ÉLEVÉE

(30) Priority: 16.10.2023 EP 23203760
(43) Date of publication of application: 18.06.2025
(73) Proprietor: Evonik Operations GmbH, 45128 Essen (DE)
(72) Inventor: The designation of the inventor has not yet been filed
(74) Representative: Evonik Patent Association
(86) International application number: PCT/EP2024/078306
(87) International publication number: WO 2025/082806

(56) References cited:
- JP-A- 2021 017 559
- KURT ADNAN ET AL: "Synthesis, characterization, and thermal degradation kinetics of the copolymer poly(4-methoxybenzyl methacrylate- co -isobornyl methacrylate)", JOURNAL OF APPLIED POLYMER SCIENCE, vol. 115, no. 4, 14 October 2009 (2009-10-14), US, pages 2359 - 2367, XP093133913, ISSN: 0021-8995, DOI: 10.1002/app.31162
- YU J M ET AL: "POLY POLY(ISOBORNYL MERHACRYLATE-C0-METHYL METHACRYLATE)(POLY(IMBA-CO-,,A))-B-POLYBUTADIENE-B-POLY(IBMA-CO-MMA)9 COPOLYMERS SYNTHESIS, MORPHOLOGY, AND PROPERTIES", MACROMOLECULES, AMERICAN CHEMICAL SOCIETY, US, vol. 30, no. 21, 20 October 1997 (1997-10-20), pages 6536 - 6543, XP000720387, ISSN: 0024-9297, DOI: 10.1021/MA961849W

## Description

### TECHNICAL FIELD OF THE INVENTION

The invention relates to polyalkyl (meth)acrylate polymers and to a method for the preparation of these polymers. The present invention is also directed to lubricating oil compositions comprising the afore-mentioned polymers, as well as to the use of said polymers as a lubricant additive or as a synthetic base fluid to be added in a lubricating oil composition, preferably in a gear oil composition, a transmission oil composition, a hydraulic oil composition, an engine oil composition, a marine oil composition, an industrial lubricating oil composition or in grease.

### BACKGROUND OF THE INVENTION

The present invention relates to the field of lubrication. Lubricants are compositions that reduce friction between surfaces. In addition to allowing freedom of motion between two surfaces and reducing mechanical wear of the surfaces, a lubricant also may inhibit corrosion of the surfaces and/or may inhibit damage to the surfaces due to heat or oxidation. Examples of lubricant compositions include, but are not limited to, engine oils, transmission fluids, gear oils, industrial lubricating oils, greases and metalworking oils.

Lubricants typically contain a base fluid and variable amounts of additives. The terminology base oil, base stock or base fluid is commonly used interchangeably. Here, base fluid is used as a general term.

High viscosity base fluids are used to lift the viscosity index (VI) and to thicken lubricant formulations with demanding shear stability requirements. A typical application are gear oils which have very demanding requirements due to high mechanical stress and a broad temperature range in operation.

A wide variety of additives may be combined with the base fluid, depending on the intended use of the lubricant. Examples of lubricant additives include, but are not limited to, viscosity index improvers, thickeners, pour point depressants, oxidation inhibitors, corrosion inhibitors, dispersing agents, high pressure additives, anti-foaming agents and metal deactivators.

The most common thickener used in mineral oil based industrial gear oils is bright stock. Bright stock is a product of Group I base oil refineries which are technologically outdated so future supply is unknown. Replacement with alternative thickeners is difficult as typical polyolefin thickeners such as polyisobutylene (PIB), olefin copolymers (OCP) and polyalphaolefins (PAO) are very apolar, which causes compatibility issues (LUBES'N'GREASES (2015) 4, p.52-60; LUBES'N'GREASES (2021) 11, p.24-29; LUBES'N'GREASES (2022) 4, p.35-38). Viscosity of bright stock is also limited so high ISO viscosity grades like 680 or 1000 require a more powerful thickener in combination with bright stock.

Alternatively, thickeners having a higher polarity can also be used, which have the advantage that these polar high viscosity base fluids do not need the addition of nonpolar low viscous fluids, such as esters or high alkylated naphthalenes, as compatibilizers for the polar lubricant additives. Furthermore, polar high viscosity fluids usually do not cause problems with coatings and seals in comparison with polar low viscous fluids. Such thickeners with higher polarity are for example copolymers of alpha-olefins with maleates (e.g. DE3223694), acrylates (e.g. DE2243064 or EP4015604), methacrylates (e.g. EP0471266) or terpolymers based on the aforementioned monomers (e.g. WO2020078770).

Alternatively, oil compatible polyesters (e.g. WO0146350 or WO2022003087), polyvinylethers (US20130165360), polyacrylates (e.g. EP4073210), or polyalkyl (meth)acrylate (PAMA) can be applied.

More specifically, polyalkyl (meth)acrylate base fluids (PAMA base fluids) are mainly used and designed as thickeners for very high performing synthetic or semi-synthetic formulations, which have similar performance parameters as polyalphaolefin base fluids (PAO base fluids). PAMA base fluids are commonly used in most demanding applications, such as wind turbine gear oils. The document US9,617,495 discloses polyalkyl (meth)acrylates for use in lubricants with high viscosity index and good anti-wear performance, particularly in wind turbine transmissions. To achieve this targeted purpose, the polyalkyl (meth)acrylate polymers disclosed in US9,617,495 are prepared using a monomer mixture comprising from 50 to 100% by weight of linear and branched C₆-C₁₅ alkyl (meth)acrylates, wherein the amount of branched alkyl (meth)acrylates is from 5 to 80% by weight, preferably from 10 to 65% by weight, based on the total weight of C₆-C₁₅ alkyl (meth)acrylates. All examples are based on a careful balance of linear and branched monomers to provide high viscosity index (VI), while preventing crystallization at low temperatures. It is described that the transmission lubricants must comprise at least 30% by weight of polyalkyl (meth)acrylates, which is a very high treat rate. However, for less demanding applications, the required high treat rate of PAMA to reach the viscometric performance makes them less attractive compared to polyolefins, such as PIB.

Monomers with aromatic or non-aromatic alicyclic side chains are well known for providing high glass temperature properties to the polymers they are incorporated in, and are therefore commonly used in polymers for optical components, resins, adhesives, or coatings (Ullmann's Encyclopedia of Industrial Chemistry, Edition 2013, Chapter "Polymethacrylates" on page 3; CN115894822A; WO2022033945A1).

JP2021017559 relates to copolymers prepared with a mixture of monomers having a cyclic chain (Formula 1 to 5) and branched (meth)acrylate monomers (Formula 6), and their use, as additives, in a lubricating oil composition. It is described that these lubricating oil additives have good properties in thick oil film forming capability and wear resistance. The examples provided are prepared in Yubase 3 and 4 API Group III base oils with a kinematic viscosity at 100 °C up to 4 mm²/s and the lubricating oil compositions all have a targeted kinematic viscosity at 100 °C of 5.4 mm²/s. Due to their low viscosities, such thin gear oil formulations require additional measures to protect the surfaces from damage. One concept is the formation of sticky films on the surface as described in JP2021017559. These film formers ideally have little impact on the bulk viscosity of the formulation in order to avoid unnecessary thickening which either limits the amount of additive or requires thinner base oils for the formulation.

WO2016188839 relates to additives for diesel fuel, in which the additives are copolymers prepared with bicyclic (meth)acrylate ester (e.g. IBOMA) and C₈-C₂₄ (meth)acrylate, and optionally at least one aromatic vinyl monomer, and/or other ethylenically unsaturated monomers. The copolymers have a weight-average molecular weight above 400,000 Dalton and up to 50,000,000 Dalton and are used as additive package for fuels.

There is still the need to provide highly shear stable polymeric synthetic base fluids or lubricating oil polymeric additives, which have a positive influence on oil solubility and component solubility. Furthermore, the new polymers should be able to thicken an oil to a desired viscosity, even at low treat rates. The polymers should have good viscometric performance, including low temperature and viscosity index performance to reduce the effect of changes in viscosity with temperature, when used in lubricant oil compositions.

### BRIEF SUMMARY OF THE INVENTION

Surprisingly, it has been found that the polyalkyl (meth)acrylate polymer, comprising a certain amount of alicyclic methacrylate monomer units a) as defined in claim 1, can meet the viscometric targets of industrial gear oils at treat rates close to simple well-known polyolefins, such as ethylene-propylene copolymers or polyisobutylenes, usually used in the lubricant market. In addition, they have the advantages of a polar high viscous base fluid, e.g. compatibilization of additives with the base fluid, which allows a full or partial replacement of bright stock in the formulation.

Accordingly, a first aspect of the invention is a polyalkyl (meth)acrylate polymer as defined in claim 1 and its dependent claims.

A second aspect of the invention is a method for preparing the polyalkyl (meth)acrylate polymers according to the invention.

A third aspect of the invention is a lubricating oil composition comprising at least one base oil and at least one polyalkyl (meth)acrylate polymer according to the invention.

A fourth aspect of the invention is a method of thickening a lubricating oil composition by adding a polyalkyl (meth)acrylate polymer according to the present invention, as a lubricant additive or a synthetic base fluid, to said lubricating oil composition, preferably a gear oil composition, a transmission oil composition, a hydraulic oil composition, an engine oil composition, a marine oil composition, an industrial lubricating oil composition or in grease.

### DETAILED DESCRIPTION OF THE INVENTION

### Polymers according to the invention

The present invention relates to a polyalkyl (meth)acrylate polymer obtainable by polymerizing a monomer composition comprising:
a) at least 10% by weight of monomer a) selected from the group consisting of an alkyl methacrylate of formula (I) or a mixture thereof, based on the total weight of the monomer composition, 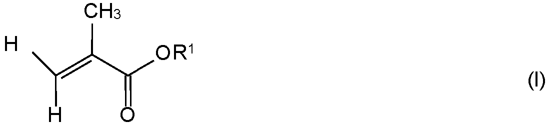 wherein R¹ is a substituted or unsubstituted alicyclic radical,
b) from 0 to 90% by weight of monomer b) selected from the group consisting of an alkyl methacrylate of formula (II) or a mixture thereof, based on the total weight of the monomer composition, 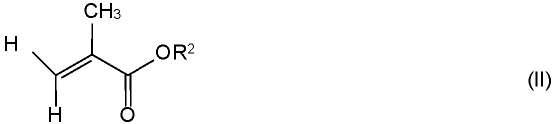 wherein R² is a branched alkyl radical having 8 to 10 carbon atoms and wherein from 80% to 100% by weight of the R² radicals are branched, based on the total amount of methacrylate monomers b) of formula (II),
c) from 0 to 90% by weight of monomer c) selected from the group consisting of an alkyl methacrylate monomer of formula (III) or a mixture thereof, based on the total weight of the monomer composition, 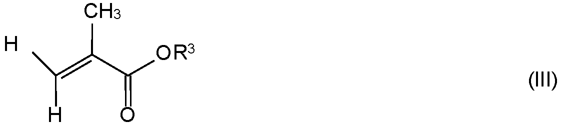 wherein R³ is a linear or branched alkyl radical having 11 to 30 carbon atoms,

wherein the total amount of monomers a), b) and c) sums up to 90% by weight or more, based on the total weight of the monomer composition, and
wherein the average carbon number of alkyl chains R¹, R² and R³ of monomers a), b) and c) in the monomer composition is from 7 to 10.2 carbon atoms, and
wherein the polyalkyl (meth)acrylate polymer has a weight-average molecular weight from 5,000 to 30,000 g/mol according to DIN 55672-1.

In the present invention, the term "alkyl methacrylate" refers to esters of methacrylic acid and the term "alkyl acrylate" refers to esters of acrylic acid. The term "(meth)acrylate" refers to esters of acrylic acid, esters of methacrylic acid or a mixture of esters of acrylic acid and methacrylic acid.

Within the meaning of the present invention, the monomer composition corresponds to the monomers used to prepare the polymer according to the present invention (not including the other reactants such as initiators, chain transfer agents).

Within the meaning of the present invention, the term "average carbon number of alkyl chains R¹, R² and R³ of monomers a), b) and c) in the monomer composition" corresponds to the average carbon number of the alkyl chains of monomers a), and optionally monomers b) and/or monomers c) when also present in the monomer composition.

According to the preferred aspect of the invention, the polyalkyl (meth)acrylate polymer has a kinematic viscosity from 3,000 to 50,000 mm²/s at 100 °C according to ASTM D445. More preferably, the polyalkyl (meth)acrylate polymer has a kinematic viscosity from 3,000 to 30,000 mm²/s at 100 °C according to ASTM D445, even more preferably from 5,000 to 20,000 mm²/s at 100 °C according to ASTM D445.

According to the present invention, the polyalkyl (meth)acrylate polymer comprises at least 10% by weight of monomer a) selected from the group consisting of an alkyl methacrylate with the formula (I) or a mixture thereof, wherein R¹ is a substituted or unsubstituted alicyclic radical. Preferably, the polyalkyl (meth)acrylate polymer comprises from 10% to 100% by weight of monomer a), more preferably at least 15% by weight of monomer a), more preferably from 15% to 90% by weight, even more preferably from 20% to 80% by weight, most preferably from 24% to 70% by weight, most preferably from 30% to 70% by weight, based on the total weight of the monomer composition.

Preferably, the monomer a) is selected from the group consisting of cyclohexyl methacrylate, isobornyl methacrylate, 3,3,5-trimethylcyclohexyl methacrylate, 4-tert-butylcyclohexyl methacrylate, cyclopentyl methacrylate, dicyclopentanyl methacrylate, or a mixture thereof. More preferably, the monomer a) is selected from the group consisting of cyclohexyl methacrylate, isobornyl methacrylate, 3,3,5-trimethylcyclohexyl methacrylate, dicyclopentanyl methacrylate, or a mixture thereof.

According to the present invention, the monomer composition to prepare the polyalkyl (meth)acrylate polymer comprises from 0 to 90% by weight, preferably from 0 to 85% by weight, more preferably from 0 to 80% by weight, even more preferably from 0 to 76% by weight, most preferably from 0 to 70% by weight, of monomer b) of formula (II), based on the total weight of the monomer composition.

Preferably, the monomer b) of formula (II) is selected from the group consisting of 2-octyl methacrylate, isooctyl methacrylate, 2-ethylhexyl methacrylate, isononyl methacrylate, 2,6-dimethyl-4-heptyl methacrylate, 2-propylheptyl methacrylate, isodecyl methacrylate, or a mixture thereof.

According to another preferred aspect of the present invention, the monomer composition to prepare the polyalkyl (meth)acrylate polymer may further comprises alkyl methacrylate monomer c) of formula (III) having a linear or a branched alkyl chain from 11 to 30 carbon atoms, preferably alkyl methacrylate monomer c) having a linear or a branched alkyl chain from 11 to 15 carbon atoms, or a mixture thereof. The alkyl methacrylates c) refer to esters of methacrylic acid with linear or branched chain alcohols having from 11 to 30 carbon atoms. The term "esters of methacrylic acid with linear or branched chain alcohols having 11 to 30 carbon atoms" encompasses individual methacrylic esters with an alcohol of a particular length, and likewise mixtures of methacrylic esters with alcohols of different lengths. Most preferred alkyl methacrylate c) is lauryl methacrylate (alkyl methacrylates having a C₁₂-C₁₄ linear alkyl group).

According to the present invention, the monomer composition to prepare the polyalkyl (meth)acrylate polymer comprises from 0 to 90% by weight of monomer c) of formula (III), preferably from 0 to 85% by weight, more preferably from 0 to 80% by weight, even more preferably from 0 to 76% by weight, most preferably from 0 to 70% by weight, of monomer c), based on the total weight of the monomer composition.

According to the present invention, the monomer composition to prepare the polyalkyl (meth)acrylate polymer comprises from 90% by weight or more of monomers a), b) and c), based on the total weight of the monomer composition. It means that the total amount of monomers a), and optionally b) and c) since monomers b) and c) are optional according to the present invention, is at least 90% by weight in the monomer composition, based on the total weight of the monomer composition. In other words, the monomer composition to prepare the polyalkyl (meth)acrylate polymer comprises from 90 to 100% by weight of monomers a), b) and c), based on the total weight of the monomer composition. Preferably, the total amount of monomers a), b) and c) in the monomer composition sums up to 95% by weight or more, based on the total weight of the monomer composition. In other words, the monomer composition to prepare the polyalkyl (meth)acrylate polymer preferably comprises at least 95% by weight of monomers a), optionally b) and c) since monomers b) and c) are optional according to the present invention, based on the total weight of the monomer composition. Preferably, the monomer composition to prepare the polyalkyl (meth)acrylate polymer preferably comprises from 95 to 100% by weight of monomers a), b) and c), based on the total weight of the monomer composition.

According to a preferred aspect of the invention, the monomer composition to prepare the polyalkyl (meth)acrylate polymer may further comprise a monomer d) selected from the group consisting of alkyl (meth)acrylate having a linear alkyl chain from 1 to 6 carbon atoms, alkyl acrylates having an alkyl chain from 8 to 18 carbon atoms, or a mixture thereof, based on the total weight of the monomer composition. Most preferred monomer d) is selected from the group consisting of methyl methacrylate, methyl acrylate, butyl methacrylate, butyl acrylate, ethyl methacrylate, ethyl acrylate, 2-ethylhexyl acrylate, 2-propylheptyl acrylate, lauryl acrylate, isotridecyl acrylate, stearyl acrylate, or a mixture thereof.

Preferably, the monomer composition to prepare the polyalkyl (meth)acrylate polymer comprises from 0 to 5% by weight, more preferably from 0 to 3% by weight, of monomer d), based on the total weight of the monomer composition.

According to a preferred aspect of the invention, the total amount of monomers a), b), c) and d) in the monomer composition to prepare the polyalkyl (meth)acrylate polymer sums up to at least 95% by weight, more preferably sums up to 100% by weight, based on the total weight of the monomer composition. When the total amount of monomers a), b), c) and d) in the monomer composition to prepare the polyalkyl (meth)acrylate polymer sums up to 100% by weight, it means that the monomer composition to prepare the polyalkyl (meth)acrylate polymer consists of a mixture of monomers a), and optionally monomers b), c) and d).

According to the present invention, the average carbon number of the alkyl chains R¹, R² and R³ of monomers a), and optionally b) and/or c) present in the monomer composition is from 7 to 10.2 carbon atoms, preferably from 7 to 10 carbon atoms, more preferably from 7.5 to 10 carbon atoms.

According to the present invention, the polyalkyl (meth)acrylate polymer according to the invention has a weight-average molecular weight from 5,000 to 30,000 g/mol, preferably from 10,000 to 25,000 g/mol, more preferably from 12,000 to 20,000 g/mol, according to DIN 55672-1.

In the present invention, the weight-average molecular weights (M_{w}) or number-average molecular weights (Mₙ) of the copolymers were determined by gel permeation chromatography (GPC) using PMMA calibration standards according to DIN 55672-1 using the following measurement conditions:
Eluent: tetrahydrofuran (THF)
Operation temperature: 35 °C
Columns: the column set consists of four columns: two columns SDV 106 Å, one column SDV 104Å and one column SDV 103Å (PSS Standards Service GmbH, Mainz, Germany), all with the size of 300 x 8 mm and an average particle size of 10 µm
Flow rate: 1mL/min
Injected volume: 100 µL
Instrument: Agilent 1100 series consisting of an autosampler, pump and column oven
Detection device: a refractive index detector from Agilent 1100 series.

Preferably, the polymers of the invention have a very low degree of cross-linking and a narrow molecular weight distribution, which further contributes to the shear resistance. The low degree of crosslinking and the narrow molecular weight are reflected in the polydispersity index of the polyalkyl (meth)acrylate polymers. Preferably, the polydispersity index (PDI) of the copolymers according to the invention is in the range of from 1.0 to 3.0, more preferably in the range of from 1.5 to 2.8. The polydispersity index is defined as the ratio of weight-average molecular weight to number-average molecular weight (M_{w}/Mₙ).

According to the invention, the polyalkyl (meth)acrylate polymer is an amorphous statistical polymer, wherein the monomer units a) and optionally monomers b) and/or c) and/or d) are distributed randomly, and sometimes unevenly, in the polymer.

### Method for preparing the polyalkyl (meth)acrylate polymer of the invention

According to the present invention, the above-mentioned polymers are prepared following the method comprising the steps of:
i) providing a monomer composition as described above; and
ii) initiating radical polymerization in the monomer composition.

The polyalkyl (meth)acrylates can preferably be obtained by free-radical polymerization. Accordingly, the proportion by weight of the respective repeat units that these polymers have is calculated from the proportions by weight of corresponding monomers used for preparation of the polymers.

The preparation of the polyalkyl (meth)acrylates from the above-described compositions is known per se. For instance, these polymers can be obtained especially by free-radical polymerization, and also related processes, for example ATRP (= Atom Transfer Radical Polymerization) or RAFT (= Reversible Addition Fragmentation Chain Transfer).

One comprehensive description, more particularly with further references, of these methods is given in K. Matyjaszewski, T. P. Davis, Handbook of Radical Polymerization, Wiley Interscience, Hoboken 2002, to which explicit reference is made for the purposes of the disclosure.

The free-radical polymerization of the ethylenically unsaturated compounds can be affected in a manner known per se. Customary free-radical polymerization is described inter alia in Ullmann's Encyclopedia of Industrial Chemistry, Sixth Edition.

In the context of the present invention, the polymerization is initiated using at least one polymerization initiator for free-radical polymerization. These include the azo initiators widely known in the specialist field, such as 2,2'-azobisisobutyronitrile, 2,2'-azobis(2,4-dimethylvaleronitrile) and 1,1-azobiscyclohexanecarbonitrile, organic peroxides such as dicumyl peroxide, diacyl peroxides such as dilauroyl peroxide, peroxydicarbonates such as diisopropyl peroxydicarbonate, peresters such as tert-butyl peroxy-2-ethylhexanoate, and the like.

According to the invention, very particular preference is given to polymerization initiators having a half-life of 1 hour at a temperature in the range from 25°C to 200°C, preferably in the range from 50°C to 150°C, especially in the range from 50°C to 100°C. Particularly preferred polymerization initiators are peroxidic polymerization initiators, more preferably tert-butylperoxy-2-ethylhexanoate.

In preferred processes, the at least one polymerization initiator for the free-radical polymerization is added preferably in one step, more preferably in multiple addition steps, even more preferably in at least two addition steps, most preferably in three addition steps. The polymerization initiator can preferably be added all at once in each addition step. More preferably, the polymerization initiator can be metered in each addition step, even more preferably continuously, especially with a constant metering rate.

The polymerization initiator can be added in each step in undiluted form or in diluted form, preferably dissolved in a solvent, especially in the form of a 10% by weight to 50% by weight solution in at least one mineral oil, in a polyalphaolefin and/or in the starting material monomers, more preferably in monomer a), monomer b), monomer c), monomer d), or a mixture thereof.

For the purpose of the present invention, it has been found to be very particularly appropriate to add the polymerization initiator in three steps, in which case, the amount of initiator added in the third step is greater than the amount of initiator added in the first step and in the second step. More preferably, the amount of polymerization initiator added in the third step is greater than the amount added in the second step, based on the total weight of the polymerization initiator added in the second step. More preferably, the amount of polymerization initiator added in the third step is at least 120% by weight, even more preferably from 120% to 1000% by weight, most preferably from 150% to 500% by weight, based on the total weight of the polymerization initiator added in the second step.

In the third step, the polymerization initiator is appropriately added all at once. Alternatively, it is also preferable to meter in the polymerization initiator in the third step, preferably continuously, especially with a constant metering rate. In a very particularly preferred embodiment of the present invention, the polymerization initiator is metered in continuously in the first, in the second and in the third step, favorably with a constant metering rate in each case, the mean metering rate of the third step preferably being greater than the mean metering rate of the second step, and the mean metering rate of the second step preferably being greater than the mean metering rate of the first step. The ratio of the mean metering rate of the third step to the mean metering rate of the second step is preferably greater than 1.2:1, preferably in the range from 1.2:1 to 10:1, more preferably greater than 1.5:1, even more preferably greater than 2:1, especially greater than 3:1.

The third step is preferably started at a time at which 0.01 to 50% by weight, more preferably 10 to 40% by weight, even more preferably 15 to 35% by weight of the total amount of the polymerization initiator added during the second step, is consumed.

The process detailed above allows a rapid and extremely effective polymerization of ethylenically unsaturated compounds and leads to polymers with comparably low residual monomer contents. Nevertheless, it has occasionally been found to be extremely favorable to provide further initiation toward the end of the reaction in order to lower the residual monomer content of the reaction mixture still further. Further initiation is preferably provided at a time at which at least 75% by weight, appropriately at least 90% by weight and especially at least 95% by weight of the total amount of the polymerization initiator added during the last step has been consumed. Preference is given to adding in a further 5% by weight to 100% by weight of polymerization initiator, based on the total amount of polymerization initiator added beforehand.

The total amount of initiator is preferably in the range from 0.5 to 1% by weight, and more preferably in the range from 0.6 to 0.8% by weight, based on the total weight of the monomers (namely, the total weight of the monomer composition).

The process can be performed either in the presence or in the absence of a chain transfer agent. The chain transfer agents used may be typical species described for free-radical polymerizations, as known to those skilled in the art.

The sulfur-free chain transfer agents include, for example, without any intention that this should impose a restriction, dimeric α-methylstyrene (2,4-diphenyl-4-methyl-1-pentene), enol ethers of aliphatic and/or cycloaliphatic aldehydes, terpenes, β-terpinene, terpinolene, 1,4-cyclohexadiene, 1,4-dihydronaphthalene, 1,4,5,8-tetrahydronaphthalene, 2,5-dihydrofuran, 2,5-dimethylfuran and/or 3,6-dihydro-2H-pyran, preference being given to dimeric α-methylstyrene.

The sulfur-containing chain transfer agents used may preferably be mercapto compounds, dialkyl sulfides, dialkyl disulfides and/or diaryl sulfides. The following chain transfer agents are mentioned by way of example: di-n-butyl sulfide, di-n-octyl sulfide, diphenyl sulfide, thiodiglycol, ethylthioethanol, diisopropyl disulfide, di-n-butyl disulfide, di-n-hexyl disulfide, diacetyl disulfide, diethanol sulfide, di-t-butyl trisulfide and dimethyl sulfoxide. Compounds used with preference as chain transfer agents are mercapto compounds, dialkyl sulfides, dialkyl disulfides and/or diaryl sulfides. Examples of these compounds are ethyl thioglycolate, 2-ethylhexyl thioglycolate, pentaerythritol tetrathio-glycolate, cysteine, 2-mercaptoethanol, 1,3-mercapto-propanol, 3-mercaptopropane-1,2-diol, 1,4-mercaptobutanol, mercaptoacetic acid, 3-mercaptopropionic acid, thioglycolic acid, mercaptosuccinic acid, thioglycerol, thioacetic acid, thiourea and alkyl mercaptans such as n-butyl mercaptan, n-hexyl mercaptan, t-dodecyl mercaptan or n-dodecyl mercaptan. Polymerization regulators used with particular preference are mercapto alcohols and mercapto carboxylic acids. In the context of the present invention, very particular preference is given to the use of n-dodecyl mercaptan and tert-dodecyl mercaptan as chain transfer agents.

In a particular aspect of the present invention, it is possible to use mixtures of chain transfer agents, preferred mixtures comprising especially sulfur-containing chain transfer agents such as the abovementioned mercaptan derivatives and sulfur-free chain transfer agents such as terpinolene, terpinene and derivatives thereof, and suitable transition metal complexes. More preferably, the chain transfer agents are selected from the group consisting of n-dodecyl mercaptan, tert-dodecyl mercaptan, terpinolene or a mixture thereof.

The chain transfer agents are used preferably in amounts of 0.05 to 10% and especially 1 to 6% by weight and more preferably 2 to 4.5% by weight, based on the total weight of the monomers used in the polymerization (namely, the total weight of the monomer composition).

Further information can be found by the person skilled in the art in the specialist literature, especially the publications H. Rausch-Puntigam, T. Völker "Acryl- und Methacrylverbindungen" [Acrylic and Methacrylic Compounds] Springer, Heidelberg, 1967; Houben-Weyl "Methoden der organischen Chemie" [Methods of Organic Chemistry] Vol. XIV/1, p. 66ff., Georg Thieme, Heidelberg, 1961 and Kirk-Othmer "Encyclopedia of Chemical Technology" Vol. 1, p. 296ff., J. Wiley, New York, 1978.

Processes of particular interest are especially those in which a majority of the monomers is initially charged and the polymerization initiators, as explained above, are added in several steps over the polymerization time. Preferably, at least 50% by weight, especially at least 60% by weight, more preferably at least 80% by weight and most preferably at least 90% by weight of the monomers can be initially charged in a reactor. Subsequently, the initiators mentioned can be added at the polymerization temperature. The chain transfer agents may either be initially charged or added with the initiator, the chain transfer agents being initially charged in preferred processes. Particular preference here is given to processes in which at least 50% by weight, especially at least 60% by weight, more preferably at least 80% by weight and most preferably at least 90% by weight of the total weight of chain transfer agent are initially charged in a reactor.

The polymerization can be performed at standard pressure, reduced pressure or elevated pressure. The polymerization temperature is also uncritical. In general, however, it is in the range of from 20 to 200 °C, preferably from 20 to 180 °C and more preferably from 60 to 150°C. In the case of performance of a free-radical polymerization, higher polymerization temperatures may be preferable; for instance, the polymerization temperature in the case of stepwise addition of the initiator may preferably be in the range from 20 to 180 °C, more preferably 60 to 150 °C. Particular preference is given here to processes in which the polymerization is performed at a temperature in the range from 0 to 30 °C above the reaction temperature, at which the half-life of the initiator is 30 minutes.

The polymerization can be performed with or without solvent. The term "solvent" should be understood here in a broad sense. The solvents to be used include hydrocarbon solvents, for example aromatic solvents such as toluene, benzene and xylene, saturated hydrocarbons, for example cyclohexane, heptane, octane, nonane, decane, dodecane, which may also be present in branched form. These solvents can be used individually or else as a mixture. Particularly preferred solvents are mineral oils, natural oils and synthetic oils, and mixtures thereof.

In a preferred embodiment, the proportion of solvent can be kept low, preferred embodiments of the process according to the invention having the feature that, after the polymerization has ended, there is no need to remove solvent from the composition, for example by distillation, in order to obtain a useable polymer mixture. Accordingly, the total amount of solvent, which is used in the polymerization reaction, is preferably in the range from 0 to 70% by weight, more preferably 0 to 50% by weight, even more preferably 0 to 40% by weight based on the total weight of the monomer composition.

The measures detailed above, especially the stepwise addition of the initiator to a reactor comprising relatively large amounts of the monomers, can give surprising advantages. One of these is more particularly that the reaction can be performed without any great amounts of solvents. This allows the reaction to be conducted very inexpensively. It is surprisingly possible to obtain, more particularly, very narrow molecular weight distributions with a low polydispersity index without any need to use costly processes such as ATRP. In addition, the reaction time and initiator consumption can be minimized.

### Lubricating oil compositions

As indicated above, the present invention also relates to a lubricating oil composition comprising at least one base oil and at least one polyalkyl (meth)acrylate polymer as defined in the present invention.

The base oils correspond to lubricant base oils, mineral, synthetic or natural, animal or vegetable oils suited to their use/chosen depending on the intended use.

The base oils used in formulating the lubricating oil compositions according to the present invention include, for example, conventional base stocks selected from API (American Petroleum Institute) base stock categories known as Group I, Group II, Group III, Group IV and Group V. The Group I and II base stocks are mineral oil materials (such as paraffinic and naphthenic oils) having a viscosity index (or VI) of less than 120. Group I is further differentiated from Group II in that the latter contains greater than 90% saturated materials and the former contains less than 90% saturated material (that is more than 10% unsaturated material). Group III is considered the highest level of mineral base oil with a VI of greater than or equal to 120 and a saturates level greater than or equal to 90%. Group IV base oils are polyalphaolefins (PAO). Group V base oils are esters and any other base oils not included in Group I to IV base oils. These base oils can be used individually or as a mixture.

Preferably, the base oil included in the lubricating oil composition of the present invention is selected from the group of mineral oils consisting of API Group I base oils, API Group II base oils, API Group III base oils or a mixture thereof. Most preferably, the lubricant composition comprises an API Group I base oil, API Group II base oil or a mixture thereof.

According to a preferred embodiment of the invention, the lubricating oil composition comprises at least one base oil selected from an API Group I base oil, API Group II base oil or a mixture thereof, with a kinematic viscosity at 100 °C according to ASTM D445 of 6 mm²/s or more, and at least one polyalkyl (meth)acrylate polymer as defined in the present invention.

Preferably, the lubricating oil composition comprises from 5 to 50% by weight, more preferably from 5 to 40% by weight, and even more preferably from 5 to 25% by weight of polyalkyl (meth)acrylate polymer according to the invention, based on the total weight of the lubricating oil composition.

Preferably, the lubricating oil composition according to the invention comprises from 50 to 95% by weight, more preferably from 60 to 95% by weight, and even more preferably from 75 to 95% by weight of base oil, based on the total weight of the lubricating oil composition.

All preferred aspects of the polymer, base oil and amounts as listed above apply for this lubricating oil composition.

The lubricating oil compositions according to the present invention may also comprise any other additional additives suitable for use in the formulations. These additives include additional viscosity index improvers, pour point depressants, dispersants, demulsifiers, defoamers, lubricity additives, friction modifiers, antioxidants, detergents, dyes, corrosion inhibitors and/or odorants.

According to a preferred aspect of the invention, the total content of the polyalkyl (meth)acrylates and base oil in the lubricant composition sums up from 90% by weight or more, sums up from 95% by weight or more, based on the total weight of the lubricant composition.

### Applications for the polyalkyl (meth)acrylate polymer of the invention

The invention also relates to the use of the polyalkyl (meth)acrylate polymer according to the present invention, as defined herein above, as a lubricant additive or a synthetic base fluid, by adding said polyalkyl (meth)acrylate polymer to a lubricating oil composition.

Preferably, the lubricating oil composition is a gear oil composition, a transmission oil composition, a hydraulic oil composition, an engine oil composition, a marine oil composition, an industrial lubricating oil composition or a grease.

The invention also relates to a method of thickening a lubricating oil composition by adding a polyalkyl (meth)acrylate polymer according to the present invention, as a lubricant additive or a synthetic base fluid, to said lubricating oil composition.

Thus, the invention relates to a method of optimizing the rheological properties of a lubricating oil composition by adding a polyalkyl (meth)acrylate polymer according to the present invention, as a lubricant additive or a synthetic base fluid, to said lubricating oil composition.

In the experimental part, the examples demonstrate that, even at low treat rates, the polyalkyl (meth)acrylate polymer according to the present invention provides a very good thickening effect when added to the lubricating oil composition, while maintaining good shear stability. Furthermore, the polymers have good viscometric performance, including low temperature and viscosity index performance to reduce the effect of changes in viscosity with temperature, when used in lubricating oil compositions. The polymeric additives also have a positive influence on component solubility thanks to their chemical structure.

### EXPERIMENTAL PART

The invention is further illustrated in detail hereinafter with reference to examples and comparative examples, without any intention to limit the scope of the present invention. All percentages in relation to monomers or base fluids given in the tables below are weight percentages (wt%).

### Abbreviations

| | |
|---|---|
| AP/E Core^{™} 2500 | base stock from ExxonMobil with a KV100 of ~31.5 mm²/s |
| Average C# | average carbon number of the alkyl radicals of monomers a), b) and c) |
| BV | bulk viscosity |
| BV100 | bulk viscosity @100°C in accordance with ASTM D445 |
| Chevron 600R | Group II base oil from Chevron with a KV100 of 12 mm²/s |
| CHMA | cyclohexyl methacrylate |
| cSt | centistokes corresponding to mm²/s in SI units |
| cP | centipoise corresponding to mPa·s in SI units |
| DDM | dodecyl mercaptan |
| EHA | 2-ethylhexyl acrylate |
| EHMA | 2-ethylhexyl methacrylate |
| HiTEC^{®} 307 | additive package commercially available from Afton Chemical |
| IBOMA | isobornyl methacrylate |
| Ini | initiator |
| IDMA | isodecyl methacrylate (89.9 wt% C₁₀ alkyl chain; proportion of branched alkyl chains is 98 wt%) |
| ISO | International Organization for Standardization |
| KRL | Tapered Roller Bearing Shear Stability Test according to CEC L-45-A-99 |
| KV | kinematic viscosity measured according to ASTM D445 |
| KV40 | kinematic viscosity measured at 40°C to ASTM D445 |
| KV100 | kinematic viscosity measured at 100°C to ASTM D445 |
| LIMA | alkyl methacrylate with 12 to 15 carbon atoms in the alkyl side chain (based on LIAL 125 alcohol commercially available from Sasol; proportion of branched alkyl chains is 60 wt%) |
| LMA | lauryl methacrylate (73 wt% C₁₂, 27 wt% C₁₄, all linear) |
| MMA | methyl methacrylate |
| Mₙ | number-average molecular weight |
| M_{w} | weight-average molecular weight |
| n.m. | not measured |
| PDI | polydispersity index |
| PHMA | 2-propylheptyl methacrylate |
| PP | pour point |
| PPD | pour point depressant |
| SL40 | shear loss determined at 40°C after KRL (20 hours run at 60°C) |
| TDDM | tert-dodecyl mercaptan |
| TMCHMA | trimethyl cyclohexyl methacrylate |
| VG | viscosity grade |
| VI | viscosity index |
| VPL 1-325 | Evonik VISCOPLEX^{®} 1-325, polyalkyl methacrylate pour point depressant |

### Test methods

| | |
|---|---|
| KV | A STM D445 |
| VI | A STM D2270 |
| KRL | C EC L-45-A-99 |
| PP | A STM D5950 |

### Examples

### Procedure A for preparing polymer example Ex. 1

A round-bottom flask equipped with a glass stir rod, nitrogen inlet, thermometer and reflux condenser were initially charged with the monomers as defined in Table 1. For the inventive example Ex.1, 344.3 g of EHMA, 100.0 g of LMA and 50.0 g of CHMA were charged to the flask together with 10.00 g (2.0 wt% relative to the total amount of monomers) of dodecyl mercaptan (DDM) and 5.20 g (1.04 wt% relative to the total amount of monomers) of tert-dodecyl mercaptan (TDDM). The mixture was heated to 110°C, while stirring and nitrogen bubbling for inertion. Thereafter, 3.25 g of tert-butylperoxy-2-ethylhexanoat (0.65 wt% relative to the total amount of monomers) was dissolved in 5.70 g of EHMA. The initiator solution was metered in within three hours, with addition of 5 wt% of the amount specified within the first hour, 25 wt% within the second hour and 70 wt% within the third hour. After the feed ended, the mixture was stirred for an additional hour.

Inventive examples Ex.2 to Ex.10 and Ex.21 to Ex.23, as well as comparative examples Ex.1*, Ex.2*, Ex.4* and Ex.7* to Ex.11* were prepared in the same way as inventive example 1, except that the amounts of reactants and/or other reaction conditions were changed as listed in Table 1.

### Procedure B for preparing polymer example Ex.11

For Ex.11, 192.0 g IDMA and 48.0 g of IBOMA were charged to the flask together with 58.2 g Chevron 600R, 4.56 g (1.9 wt% relative to the total amount of monomers) of DDM and 3.36 g (1.4 wt% relative to the total amount of monomers) of TDDM. The mixture was heated to 110°C, while stirring and nitrogen bubbling for inertion. Thereafter, 0.6 g of tert-butylperoxy-2-ethylhexanoat (0.25 wt% relative to the total amount of monomers) was dissolved in 1.8 g of Chevron 600R. The initiator solution was metered in within three hours, with addition of 5 wt% of the amount specified within the first hour, 25 wt% within the second hour and 70 wt% within the third hour. After the feed ended, the mixture was stirred for an additional hour, before an initiator chaser shot (0.48 g of tert- butylperoxy-2-ethylhexanoat, 0.20 wt% relative to the total amount of monomers) was added. After three hours, a second initiator chaser shot (0.48 g of tert-butylperoxy-2-ethylhexanoat, 0.20 wt% relative to the total amount of monomers) was added. Subsequently, the mixture was stirred for another 2 hours.

The inventive examples Ex.12 to Ex.20 and comparative example Ex.3*, Ex.5* and Ex.6* were prepared in a similar way as inventive example Ex.11, except that the amounts of reactants and/or other reaction conditions were changed as listed in Table 1. For Ex.18 to Ex.20, the initiator was dissolved in monomer instead of oil and the dilution with oil was done after polymerization.

Details regarding the polymer composition of the individual examples, prepared according to the above-indicated procedures A and B, are provided in Tables 1 and 2, together with basic properties of the polymers. The main amount of the monomer is always first charged to the flask. A solution of the initiator in the remaining amount of monomer or oil is then fed at 110°C over a set period of time. For copolymers with monomer mixtures, all monomers are mixed and charged to the reactor before feeding the initiator. The amount of chain transfer agent is adjusted as listed in Table 1 to control the molecular weight of the polymer. All polymers were synthesized with 0.65 wt% initiator relative to the total amount of monomers.

In the present invention, the bulk viscosity (BV) of the polymer (product obtained from polymerization reaction) corresponds to the kinematic viscosity (KV) of the resulting product of the polymerization measured in accordance with ASTM D445. Thus, the bulk viscosity of the polymers (BV100) as shown in Table 2 below, were measured as kinematic viscosity at 100°C in accordance with ASTM D445. For inventive examples Ex.11 to Ex.23, the polymer was diluted in Chevron 600R oil to simplify handling of the polymers. Thus, the bulk viscosity corresponds to the KV100 of the polymer diluted in oil.

The thickening of each polymer in oil was tested by mixing 30% by weight of polymer in 70% by weight of Chevron 600R base oil (Group II base oil). The results for the kinematic viscosity at 100°C and 40°C were measured in accordance with ASTM D445 and are listed in Table 2.

Formulations comprising the inventive and comparative polymers of Table 2 were then prepared. Formulation composition and properties such as viscosity index, kinematic viscosity, PP and shear loss are shown in Tables 3.1 and 3.2, Table 4 and Table 5. Formulations were prepared in API Group II base oil targeting a KV40 of 320 mm²/s. Examples according to the invention are listed in Tables 3, comparative examples in Table 4. Table 5 lists formulations with inventive and comparative examples for formulations targeting a KV40 of 460 mm²/s in a mixture of API Group II base oil and bright stock AP/E Core^{™} 2500.

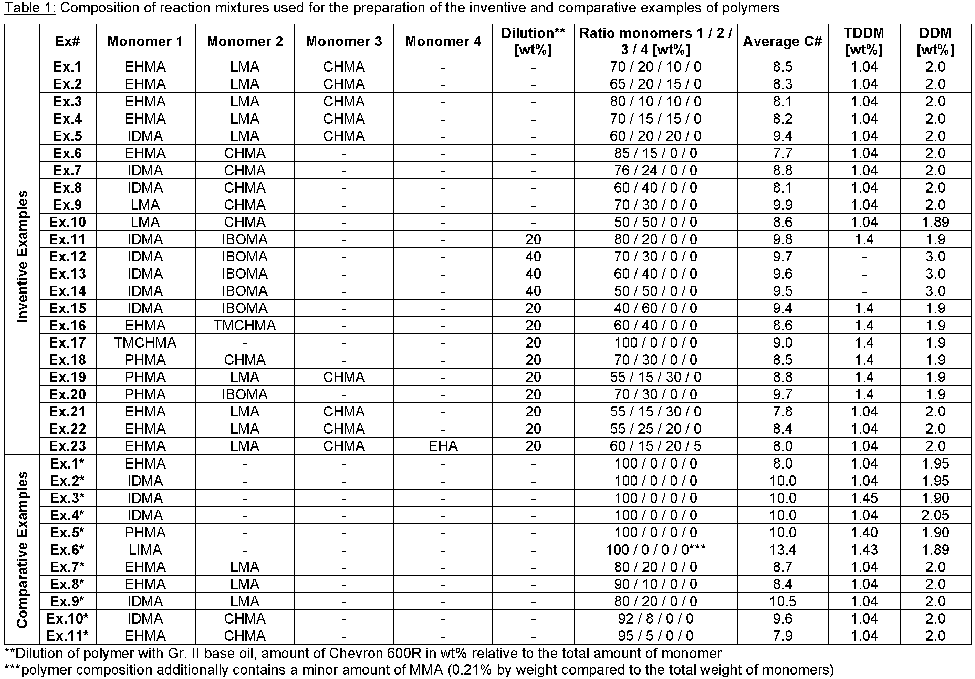

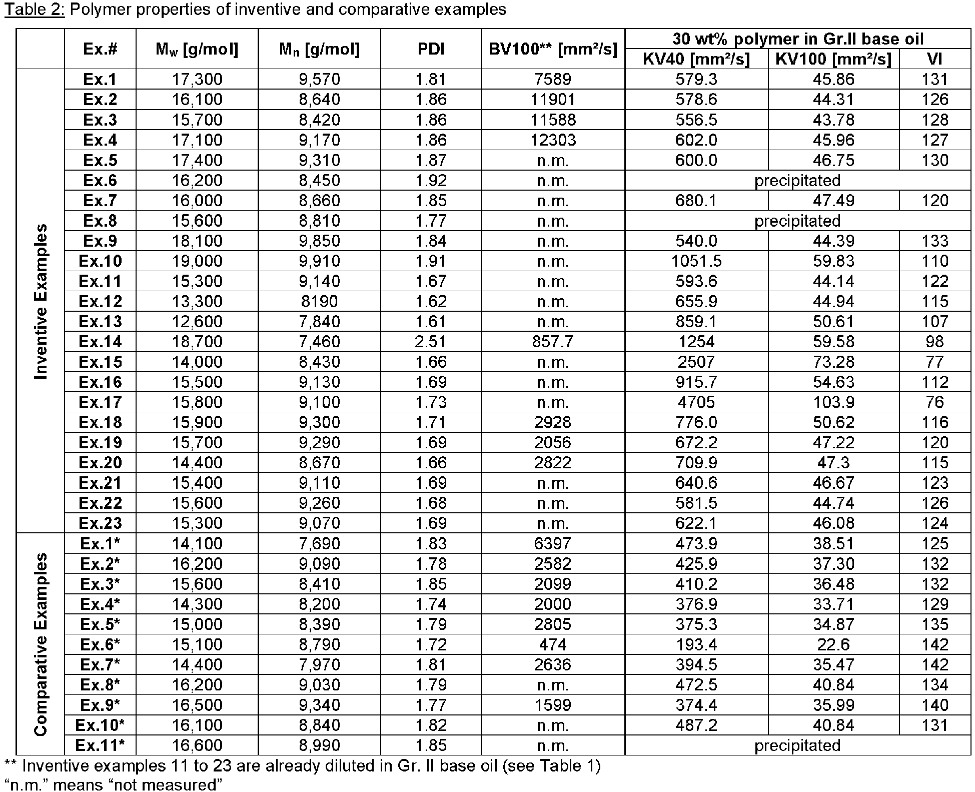

**Table 3.1: Lubricant formulations with approximately 320 mm²/s KV40 with inventive examples**

| **Formulation Ex.** | **F-1** | **F-2** | **F-3** | **F-4** | **F-5** | **F-6** | **F-7** | **F-8** | **F-9** |
|---|---|---|---|---|---|---|---|---|---|
| **Ex.1 [wt%]** | 21.0 | | | | | | | | |
| **Ex.2 [wt%]** | | 21.1 | | | | | | | |
| **Ex.3 [wt%]** | | | 21.3 | | | | | | |
| **Ex.4 [wt%]** | | | | 20.35 | | | | | |
| **Ex.7 [wt%]** | | | | | 19.2 | | | | |
| **Ex.11 [wt%]** | | | | | | 20.64* | | | |
| **Ex.12 [wt%]** | | | | | | | 20.16* | | |
| **Ex.13 [wt%]** | | | | | | | | 18.75* | |
| **Ex.14 [wt%]** | | | | | | | | | 17.25* |
| **HiTEC^{®} 307 [wt%]** | 2.65 | 2.65 | 2.65 | 2.65 | 2.65 | 2.65 | 2.65 | 2.65 | 2.65 |
| **VPL 1-325 [wt%]** | 0.5 | 0.5 | 0.5 | 0.5 | 0.5 | 0.5 | 0.5 | 0.5 | 0.5 |
| **Chevron 600R [wt%]** | 75.85 | 75.75 | 75.55 | 76.5 | 77.65 | 76.21 | 76.69 | 78.1 | 79.6 |
| **KV40 [mm²/s]** | 317.5 | 317.5 | 318.2 | 318.4 | 320.2 | 319.2 | 320.7 | 321,2 | 319.9 |
| **KV100 [mm²/s]** | 29.75 | 29.5 | 29.34 | 29.36 | 28.59 | 28.67 | 27.87 | 27.24 | 26.71 |
| **VI** | 128 | 127 | 126 | 126 | 121 | 122 | 117 | 113 | 110 |
| **PP [°C]** | -27 | -27 | -30 | -27 | -30 | -24 | -21 | -15 | -15 |
| **SL 40°C [%]** | 4.6 | 4.1 | 3.9 | 4.9 | 3.62 | 2.54 | 2.59 | 1.96 | 0.5 |

| | | | | | | | | | |
|---|---|---|---|---|---|---|---|---|---|
| * pure polymer treat rate (dilution with oil was added to total amount of Chevron 600R) | | | | | | | | | |

**Table 3.2: Lubricant formulations with approximately 320 mm²/s KV40 with inventive examples (continuation)**

| **Formulation Ex.** | **F-10** | **F-11** | **F-10** | **F-12** | **F-13** | **F-14** |
|---|---|---|---|---|---|---|
| **Ex.10 [wt%]** | 16.9 | | | | | |
| **Ex.16 [wt%]** | | 17.88* | | | | |
| **Ex.17 [wt%]** | | | 13.6* | | | |
| **Ex.18 [wt%]** | | | | 19.16* | | |
| **Ex.19 [wt%]** | | | | | 20.24* | |
| **Ex.20 [wt%]** | | | | | | 20.08* |
| **HiTEC^{®} 307 [wt%]** | 2.65 | 2.65 | 2.65 | 2.65 | 2.65 | 2.65 |
| **VPL 1-325 [wt%]** | 0.5 | 0.5 | 0.5 | 0.5 | 0.5 | 0.5 |
| **Chevron 600R [wt%]** | 79.95 | 78.97 | 83.25 | 77.69 | 76.61 | 76.77 |
| **KV40 [mm²/s]** | 321.8 | 321.9 | 320.6 | 322.0 | 321.5 | 318.8 |
| **KV100 [mm²/s]** | 28.60 | 27.99 | 26.23 | 28.7 | 29.08 | 28.27 |
| **VI** | 121 | 117 | 107 | 121 | 123 | 120 |
| **PP [°C]** | -27 | -24 | -27 | -27 | -27 | -27 |
| **SL 40°C [%]** | 3.2 | 2.6 | 3.6 | 2.2 | 2.3 | 1.6 |

| | | | | | | |
|---|---|---|---|---|---|---|
| * pure polymer treat rate (dilution with oil was added to total amount of Chevron 600R) | | | | | | |

**Table 4: Lubricant formulations with approximately 320 mm²/s KV40 with comparative examples**

| **Formulation Ex.** | **F-1*** | **F-2*** | **F-3*** |
|---|---|---|---|
| **Ex.1* [wt%]** | 23.18 | | |
| **Ex.2* [wt%]** | | 24.23 | |
| **Ex.6* [wt%]** | | | 34.41 |
| **HiTEC^{®} 307 [wt%]** | 2.65 | 2.65 | 2.65 |
| **VPL 1-325 [wt%]** | 0.5 | 0.5 | 0.5 |
| **Chevron 600R [wt%]** | 76.67 | 72.62 | 62.44 |
| **KV40 [mm²/s]** | 317.5 | 317.8 | 318.8 |
| **KV100 [mm²/s]** | 29.37 | 30.21 | 33.43 |
| **VI** | 126 | 131 | 147 |
| **PP [°C]** | -27 | -27 | -30 |
| **SL 40°C [%]** | 0.3 | 1.3 | 0.5 |

**Table 5: Lubricant formulations with approximately 460 mm²/s KV40 prepared with inventive and comparative polymer examples**

| | **Inventive examples** | | | **Comparative examples** | | |
|---|---|---|---|---|---|---|
| **Formulation Ex.** | **F-15** | **F-16** | **F-17** | **F-4*** | **F-5*** | **F-6*** |
| **Ex.6 [wt%]** | 10.1 | | | | | |
| **Ex.8 [wt%]** | | 8.8 | | | | |
| **Ex.18 [wt%]** | | | 9.76** | | | |
| **Ex.1* [wt%]** | | | | 12.05 | | |
| **Ex.3* [wt%]** | | | | | 12.2 | |
| **Ex.6* [wt%]** | | | | | | 17.4 |
| **HiTEC^{®} 307 [wt%]** | 2.7 | 2.7 | 2.7 | 2.7 | 2.7 | 2.7 |
| **VPL 1-325 [wt%]** | 0.5 | 0.5 | 0.5 | 0.5 | 0.5 | 0.5 |
| **Chevron 600R [wt%]** | 26.75 | 28.05 | 27.09 | 24.75 | 24.6 | 19.4 |
| **AP/E Core^{™} 2500 [wt%]** | 60 | 60 | 60 | 60 | 60 | 60 |
| **KV40 [mm²/s]** | 461.1 | 459.1 | 462.0 | 465.1 | 458.7 | 458.7 |
| **KV100 [mm²/s]** | 34.23 | 33.42 | 33.72 | 34.52 | 34.29 | 36.12 |
| **VI** | 110 | 107 | 108 | 111 | 111 | 119 |
| **PP [°C]** | -27 | -27 | -24 | -24 | -24 | -27 |

| | | | | | | |
|---|---|---|---|---|---|---|
| ** pure polymer treat rate (dilution with oil was added to total amount of Chevron 600R) | | | | | | |

As shown in Table 2 above, the polymers according to the invention have very high BV100 values (Ex.1 to Ex.4) in contrast to the comparative polymers. This is also reflected in the comparison of the thickening of 30% by weight of each polymer in Group II base oil as listed in Table 2. The KV40 value is most relevant for the thickening power as the viscosity at 40°C defines the ISO class of the fluid. All inventive examples have a higher KV40 value than the comparative examples. Especially the inventive examples with high amounts of cyclic comonomer (≥ 50 wt%) such as Ex.10, Ex.14, Ex.15 and Ex.17 exhibit the highest thickening with KV40 values above 1000 mm²/s in the example formulation.

The effect of the cyclic monomer on the thickening power can be observed when comparing inventive Ex.1 with Ex.7* or inventive Ex.3 with Ex.8*, wherein even the replacement of 10 wt% EHMA, which provides itself already high thickening power, with CHMA shows a good increase of KV40 values. The effect correlates to the content of cyclic monomers as it can be observed when comparing Ex.3*, Ex.10* and Ex.7 for IDMA/CHMA combinations or Ex.11 to Ex.15 for IDMA/IBOMA combinations. Larger bulky side chains allow incorporation of more cyclic monomer into the polymers while maintaining the solubility in oil (e.g. Ex.17 with 100% TMCHMA). Those results confirm that the average carbon number of the alkyl chains R¹, R² and R³ of monomers a), b) and c) in the monomer composition to prepare the polymer must be higher than 7 to maintain solubility in common base oil systems.

As shown in Table 3.1 and 3.2 above, the formulations with KV40 of 320 mm²/s comprising polymers according to the invention deliver a reduction in treat rate of at least 1.9 wt% up to 20.8 wt% in comparison to the comparative examples shown in Table 4 (Ex.1*, 2*, 6* used in F-1* to F-3*, respectively). The treat rates are even further reduced by using polymers comprising higher amounts of cyclic monomers a). With the inventive polymers according to the invention, low treat rates are achieved while fulfilling the viscometric performance required in the industry (Lubricants and industrial oils industry norm ISO 12925-1:2018). Advantageously, small shear losses at 40°C of less than 5% are observed.

As shown in Table 5, similar observations are made for formulations with higher KV40, such as 460 mm²/s, in a Group I+II base oil mixtures. The inventive examples Ex.6, Ex.8 and Ex.18 have lower treat rates (F-15 to F-17) compared to the comparative examples Ex.1*, Ex.3*, Ex.6* (F-4* to F-6*).

In conclusion, the comparative examples, based on polymers without or having low amounts of cyclic monomer units, are poorer in thickening efficiency and are not able to reduce the treat rate to the same level as the inventive polymer examples according to the present invention. Thus, the experimental data demonstrate that the polyalkyl (meth)acrylate polymers as defined in claim 1, prepared with a monomer composition comprising a sufficient amount of cyclic methacrylate monomers a), plays a crucial role to achieve a very high thickening and a treat rate advantage, while maintaining good viscometric performance. This effect is even stronger than for PAMA base fluids without cyclic comonomers, even when they contain high amounts of branched methacrylates.

## Claims

1. A polyalkyl (meth)acrylate polymer obtainable by polymerizing a monomer composition comprising:
a) at least 10% by weight of monomer a) selected from the group consisting of an alkyl methacrylate of formula (I) or a mixture thereof, based on the total weight of the monomer composition, 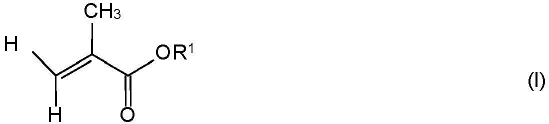 wherein R¹ is a substituted or unsubstituted alicyclic radical,
b) from 0 to 90% by weight of monomer b) selected from the group consisting of an alkyl methacrylate of formula (II) or a mixture thereof, based on the total weight of the monomer composition, 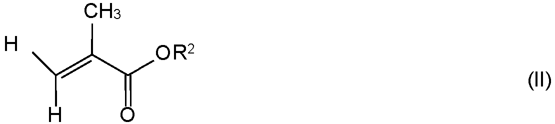 wherein R² is a branched alkyl radical having 8 to 10 carbon atoms and wherein from 80% to 100% by weight of the R² radicals are branched, based on the total amount of methacrylate monomers b) of formula (II),
c) from 0 to 90% by weight of monomer c) selected from the group consisting of an alkyl methacrylate monomer of formula (III) or a mixture thereof, based on the total weight of the monomer composition, 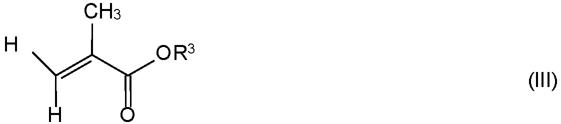 wherein R³ is a linear or branched alkyl radical having 11 to 30 carbon atoms,
wherein the total amount of monomers a), b) and c) sums up to 90% by weight or more, based on the total weight of the monomer composition, and
wherein the average carbon number of the alkyl chains R¹, R² and R³ of monomers a), b) and c) in the monomer composition is from 7 to 10.2 carbon atoms, and
wherein the polyalkyl (meth)acrylate polymer has a weight-average molecular weight from 5,000 to 30,000 g/mol according to DIN 55672-1.

2. The polyalkyl (meth)acrylate polymer according to any one of the previous claims, wherein the monomer a) is selected from the group consisting of cyclohexyl methacrylate, isobornyl methacrylate, 3,3,5-trimethylcyclohexyl methacrylate, 4-tert-butylcyclohexyl methacrylate, cyclopentyl methacrylate, dicyclopentanyl methacrylate, or a mixture thereof.

3. The polyalkyl (meth)acrylate polymer according to any one of the previous claims, wherein the monomer b) is selected from the group consisting of 2-octyl methacrylate, isooctyl methacrylate, 2-ethylhexyl methacrylate, isononyl methacrylate, 2,6-dimethyl-4-heptyl methacrylate, 2-propylheptyl methacrylate, isodecyl methacrylate, or a mixture thereof.

4. The polyalkyl (meth)acrylate polymer according to any one of the previous claims, wherein the monomer c) is an alkyl methacrylate monomer of formula (III) having a linear or a branched alkyl chain from 11 to 15 carbon atoms, or a mixture thereof.

5. The polyalkyl (meth)acrylate polymer according any one of the previous claims, wherein the monomer composition comprises at least 15% by weight of monomer a), based on the total weight of the monomer composition.

6. The polyalkyl (meth)acrylate polymer according any one of the previous claims, wherein the monomer composition comprises from 0 to 85% by weight of monomer b), based on the total weight of the monomer composition.

7. The polyalkyl (meth)acrylate polymer according any one of the previous claims, wherein the monomer composition comprises from 0 to 70% by weight, of monomer c), based on the total weight of the monomer composition.

8. The polyalkyl (meth)acrylate polymer according to any one of the previous claims, wherein the total amount of monomers a), b) and c) in the monomer composition sums up to 95% by weight or more, based on the total weight of the monomer composition.

9. The polyalkyl (meth)acrylate polymer according to any one of the previous claims, wherein the average carbon number of the alkyl chains R¹, R² and R³ of monomers a), b) and c) is from to 7 to 10 carbon atoms.

10. The polyalkyl (meth)acrylate polymer according to any one of the previous claims, wherein the monomer composition further comprises a monomer d) selected from the group consisting of alkyl (meth)acrylate having a linear alkyl chain from 1 to 6 carbon atoms, alkyl acrylates having an alkyl chain from 8 to 18 carbon atoms, or a mixture thereof, based on the total weight of the monomer composition.

11. The polyalkyl (meth)acrylate polymer according to any one of the previous claims, wherein the polyalkyl (meth)acrylate polymer has a weight-average molecular weight from 10,000 to 25,000 g/mol, preferably from 12,000 to 20,000 g/mol, according to DIN 55672-1.

12. The polyalkyl (meth)acrylate polymer according to any one of the previous claims, wherein the total amount of monomers a), b), c) and d) in the monomer composition sums up to 100% by weight, based on the total weight of the monomer composition.

13. A method for the preparation of a polyalkyl (meth)acrylate polymer as defined in any one of claims 1 to 12, wherein the method comprises the steps of:
i) providing a monomer composition as defined in any one of claims 1 to 10 and 12,
ii) initiating radical polymerization in the monomer composition to obtain the polyalkyl (meth)acrylate polymer.

14. A lubricating oil composition comprising one or more base oil and at least one polyalkyl (meth)acrylate polymer according to any one of claims 1 to 12.

15. Method of thickening a lubricating oil composition by adding a polyalkyl (meth)acrylate polymer as defined in any one of claims 1 to 12, as a lubricant additive or a synthetic base fluid, to said lubricating oil composition.

## Patentansprüche

1. Polyalkyl(meth)acrylat-Polymer, das erhältlich ist durch Polymerisieren einer Monomerzusammensetzung umfassend:
a) mindestens 10 Gew.-% Monomer a), ausgewählt aus der Gruppe bestehend aus einem Alkylmethacrylat der Formel (I) oder einer Mischung davon, bezogen auf das Gesamtgewicht der Monomerzusammensetzung, 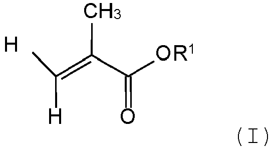 wobei R¹ für einen substituierten oder unsubstituierten alicyclischen Rest steht,
b) 0 bis 90 Gew.-% Monomer b), ausgewählt aus der Gruppe bestehend aus einem Alkylmethacrylat der Formel (II) oder einer Mischung davon, bezogen auf das Gesamtgewicht der Monomerzusammensetzung, 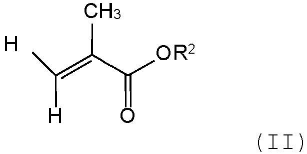 wobei R² für einen verzweigten Alkylrest mit 8 bis 10 Kohlenstoffatomen steht und wobei 80 bis 100 Gew.-% der R²-Reste verzweigt sind, bezogen auf die Gesamtmenge von Methacrylat-Monomeren b) der Formel (II),
c) 0 bis 90 Gew.-% Monomer c), ausgewählt aus der Gruppe bestehend aus einem Alkylmethacrylat-Monomer der Formel (III) oder einer Mischung davon, bezogen auf das Gesamtgewicht der Monomerzusammensetzung, 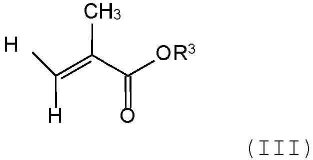
wobei R³ für einen linearen oder verzweigten Alkylrest mit 11 bis 30 Kohlenstoffatomen steht, wobei sich die Gesamtmenge der Monomere a), b) und c) auf 90 Gew.-% oder mehr, bezogen auf das Gesamtgewicht der Monomerzusammensetzung, summiert und
wobei die durchschnittliche Kohlenstoffzahl der Alkylketten R¹, R² und R³ der Monomere a), b) und c) in der Monomerzusammensetzung 7 bis 10,2 Kohlenstoffatome beträgt und
wobei das Polyalkyl(meth)acrylat-Polymer ein gewichtsgemitteltes Molekulargewicht von 5.000 bis 30.000 g/mol gemäß DIN 55672-1 aufweist.

2. Polyalkyl(meth)acrylat-Polymer nach einem der vorhergehenden Ansprüche, wobei das Monomer a) ausgewählt ist aus der Gruppe bestehend aus Cyclohexylmethacrylat, Isobornylmethacrylat, 3,3,5-Trimethylcyclohexylmethacrylat, 4-tert.-Butylcyclohexylmethacrylat, Cyclopentylmethacrylat, Dicyclopentanylmethacrylat oder einer Mischung davon.

3. Polyalkyl(meth)acrylat-Polymer nach einem der vorhergehenden Ansprüche, wobei das Monomer b) ausgewählt ist aus der Gruppe bestehend aus 2-Octylmethacrylat, Isooctylmethacrylat, 2-Ethylhexylmethacrylat, Isononylmethacrylat, 2,6-Dimethyl-4-heptylmethacrylat, 2-Propylheptylmethacrylat, Isodecylmethacrylat oder einer Mischung davon.

4. Polyalkyl(meth)acrylat-Polymer nach einem der vorhergehenden Ansprüche, wobei es sich bei dem Monomer c) um ein Alkylmethacrylat-Monomer der Formel (III) mit einer linearen oder verzweigten Alkylkette mit 11 bis 15 Kohlenstoffatomen oder eine Mischung davon handelt.

5. Polyalkyl(meth)acrylat-Polymer nach einem der vorhergehenden Ansprüche, wobei die Monomerzusammensetzung mindestens 15 Gew.-% Monomer a), bezogen auf das Gesamtgewicht der Monomerzusammensetzung, umfasst.

6. Polyalkyl(meth)acrylat-Polymer nach einem der vorhergehenden Ansprüche, wobei die Monomerzusammensetzung 0 bis 85 Gew.-% Monomer b), bezogen auf das Gesamtgewicht der Monomerzusammensetzung, umfasst.

7. Polyalkyl(meth)acrylat-Polymer nach einem der vorhergehenden Ansprüche, wobei die Monomerzusammensetzung 0 bis 70 Gew.-% Monomer c), bezogen auf das Gesamtgewicht der Monomerzusammensetzung, umfasst.

8. Polyalkyl(meth)acrylat-Polymer nach einem der vorhergehenden Ansprüche, wobei sich die Gesamtmenge der Monomere a), b) und c) in der Monomerzusammensetzung auf 95 Gew.-% oder mehr, bezogen auf das Gesamtgewicht der Monomerzusammensetzung, summiert.

9. Polyalkyl(meth)acrylat-Polymer nach einem der vorhergehenden Ansprüche, wobei die durchschnittliche Kohlenstoffzahl der Alkylketten R¹, R² und R³ der Monomere a), b) und c) 7 bis 10 Kohlenstoffatome beträgt.

10. Polyalkyl(meth)acrylat-Polymer nach einem der vorhergehenden Ansprüche, wobei die Monomerzusammensetzung ferner ein Monomer d) umfasst, das ausgewählt ist aus der Gruppe bestehend aus Alkyl(meth)acrylat mit einer linearen Alkylkette mit 1 bis 6 Kohlenstoffatomen, Alkylacrylaten mit einer Alkylkette mit 8 bis 18 Kohlenstoffatomen oder einer Mischung davon, bezogen auf das Gesamtgewicht der Monomerzusammensetzung.

11. Polyalkyl(meth)acrylat-Polymer nach einem der vorhergehenden Ansprüche, wobei das Polyalkyl(meth)acrylat-Polymer ein gewichtsmittleres Molekulargewicht von 10.000 bis 25.000 g/mol, vorzugsweise von 12.000 bis 20.000 g/mol, gemäß DIN 55672-1 aufweist.

12. Polyalkyl(meth)acrylat-Polymer nach einem der vorhergehenden Ansprüche, wobei sich die Gesamtmenge der Monomere a), b), c) und d) in der Monomerzusammensetzung auf 100 Gew.-%, bezogen auf das Gesamtgewicht der Monomerzusammensetzung, summiert.

13. Verfahren zur Herstellung eines Polyalkyl(meth)acrylat-Polymers gemäß einem der Ansprüche 1 bis 12, wobei das Verfahren folgende Schritte umfasst:
i) Bereitstellen einer Monomerzusammensetzung gemäß einem der Ansprüche 1 bis 10 und 12,
ii) Initiieren von Radikalpolymerisation in der Monomerzusammensetzung unter Erhalt des Polyalkyl(meth)acrylat-Polymers.

14. Schmierölzusammensetzung, umfassend ein oder mehrere Grundöle und mindestens ein Polyalkyl(meth)acrylat-Polymer nach einem der Ansprüche 1 bis 12.

15. Verfahren zum Verdicken einer Schmierölzusammensetzung durch Zugabe eines Polyalkyl(meth)acrylat-Polymers gemäß einem der Ansprüche 1 bis 12 als Schmiermitteladditiv oder synthetische Grundflüssigkeit zu der Schmierölzusammensetzung.

## Revendications

1. Polymère poly((méth)acrylate d'alkyle) pouvant être obtenu par polymérisation d'une composition de monomères comprenant :
a) au moins 10 % en poids de monomère a) choisi dans le groupe constitué d'un méthacrylate d'alkyle de formule (I) ou d'un mélange de celui-ci, par rapport au poids total de la composition de monomères, 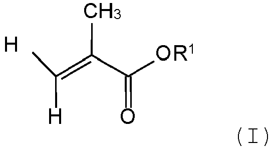 dans laquelle R¹ est un radical alicyclique substitué ou non substitué,
b) de 0 à 90 % en poids de monomère b) choisi dans le groupe constitué d'un méthacrylate d'alkyle de formule (II) ou d'un mélange de celui-ci, par rapport au poids total de la composition de monomères, 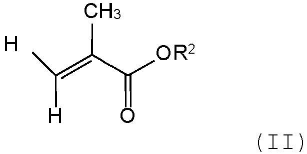 dans laquelle R² est un radical alkyle ramifié ayant 8 à 10 atomes de carbone et dans laquelle 80 % à 100 % en poids des radicaux R² sont ramifiés, par rapport à la quantité totale de monomères de méthacrylate b) de formule (II),
c) de 0 % à 90 % en poids de monomère c) choisi dans le groupe constitué d'un monomère de méthacrylate d'alkyle de formule (III) ou d'un mélange de celui-ci, par rapport au poids total de la composition de monomères, 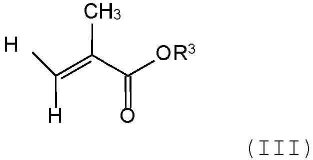
dans laquelle R³ est un radical alkyle linéaire ou ramifié ayant 11 à 30 atomes de carbone, dans laquelle la quantité totale des monomères a), b) et c) totalise jusqu'à 90 % en poids ou plus, par rapport au poids total de la composition de monomères, et
dans laquelle le nombre moyen d'atomes de carbone des chaînes alkyle R¹, R² et R³ des monomères a), b) et c) dans la composition de monomères est de 7 à 10,2 atomes de carbone, et
dans laquelle le polymère poly((méth)acrylate d'alkyle) a un poids moléculaire moyen en poids allant de 5 000 à 30 000 g/mole selon la norme DIN 55672-1.

2. Polymère poly(méth)acrylate d'alkyle) selon l'une quelconque des revendications précédentes, le monomère a) étant choisi dans le groupe constitué du méthacrylate de cyclohexyle, du méthacrylate d'isobornyle, du méthacrylate de 3,3,5-triméthylcyclohexyle, du méthacrylate de 4-tert-butylcyclohexyle, du méthacrylate de cyclopentyle, du méthacrylate de dicyclopentanyle ou d'un mélange de ceux-ci.

3. Polymère poly(méth)acrylate d'alkyle) selon l'une quelconque des revendications précédentes, le monomère b) étant choisi dans le groupe constitué du méthacrylate de 2-octyle, du méthacrylate d'isooctyle, du méthacrylate de 2-éthylhexyle, du méthacrylate d'isononyle, du méthacrylate de 2,6-diméthyl-4-heptyle, du méthacrylate de 2-propylheptyle, du méthacrylate d'isodécyle ou d'un mélange de ceux-ci.

4. Polymère poly((méth)acrylate d'alkyle) selon l'une quelconque des revendications précédentes, le monomère c) étant un monomère de méthacrylate d'alkyle de formule (III) ayant une chaîne alkyle linéaire ou ramifiée de 11 à 15 atomes de carbone ou un mélange de ceux-ci.

5. Polymère poly((méth)acrylate d'alkyle) selon l'une quelconque des revendications précédentes, la composition de monomères comprenant au moins 15 % en poids de monomère a), par rapport au poids total de la composition de monomères.

6. Polymère poly((méth)acrylate d'alkyle) selon l'une quelconque des revendications précédentes, la composition de monomères comprenant de 0 à 85 % en poids de monomère b), par rapport au poids total de la composition de monomères.

7. Polymère poly((méth)acrylate d'alkyle) selon l'une quelconque des revendications précédentes, la composition de monomères comprenant de 0 à 70 % en poids de monomère c), par rapport au poids total de la composition de monomères.

8. Polymère poly(méth)acrylate d'alkyle) selon l'une quelconque des revendications précédentes, la quantité totale de monomères a), b) et c) dans la composition de monomères totalisant 95 % en poids ou plus, par rapport au poids total de la composition de monomères.

9. Polymère poly((méth)acrylate d'alkyle) selon l'une quelconque des revendications précédentes, le nombre moyen d'atomes de carbone des chaînes alkyle R¹, R² et R³ des monomères a), b) et c) étant de 7 à 10 atomes de carbone.

10. Polymère poly((méth)acrylate d'alkyle) selon l'une quelconque des revendications précédentes, la composition de monomères comprenant en outre un monomère d) choisi dans le groupe constitué d'un (méth)acrylate d'alkyle ayant une chaîne alkyle linéaire de 1 à 6 atomes de carbone, des acrylates d'alkyle ayant une chaîne alkyle de 8 à 18 atomes de carbone ou d'un mélange de ceux-ci, par rapport au poids total de la composition de monomères.

11. Polymère poly((méth)acrylate d'alkyle) selon l'une quelconque des revendications précédentes, le polymère poly( (méth)acrylate d'alkyle) ayant un poids moléculaire moyen en poids allant de 10 000 à 25 000 g/mole, de préférence allant de 12 000 à 20 000 g/mole, selon la norme DIN 55672-1.

12. Polymère poly((méth)acrylate d'alkyle) selon l'une quelconque des revendications précédentes, la quantité totale de monomères a), b), c) et d) dans la composition de monomères totalisant jusqu'à 100 % en poids, par rapport au poids total de la composition de monomères.

13. Procédé de préparation d'un polymère poly( (méth)acrylate d'alkyle) tel que défini dans l'une quelconque des revendications 1 à 12, le procédé comprenant les étapes de :
i) fourniture d'une composition de monomères telle que définie dans l'une quelconque des revendications 1 à 10 et 12,
ii) initiation d'une polymérisation radicalaire dans la composition de monomères pour obtenir le polymère poly((méth)acrylate d'alkyle).

14. Composition d'huile lubrifiante comprenant une ou plusieurs huiles de base et au moins un polymère poly( (méth)acrylate d'alkyle) selon l'une quelconque des revendications 1 à 12.

15. Procédé pour l'épaississement d'une composition d'huile lubrifiante par ajout d'un polymère poly( (méth) acrylate d'alkyle) tel que défini dans l'une quelconque des revendications 1 à 12, en tant qu'additif lubrifiant ou fluide de base synthétique, à ladite composition d'huile lubrifiante.
